(19)

Europäisches
Patentamt
European
Patent Office
Office européen
des brevets

(11) **EP 4 075 115 A1**

(12) **EUROPEAN PATENT APPLICATION**

(43) Date of publication:
**19.10.2022  Bulletin 2022/42**

(21) Application number: **22168667.8**

(22) Date of filing: **15.04.2022**

(51) International Patent Classification (IPC):
***G01M 11/02*** *(2006.01)*      ***G02B 27/00*** *(2006.01)*
***G03F 7/20*** *(2006.01)*

(52) Cooperative Patent Classification (CPC):
**G01M 11/0242; G02B 27/0025; G02B 27/0068;
G02B 27/0081;** G03F 7/706

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **16.04.2021  IT 202100009725**

(71) Applicant: **Dynamic Optics S.r.l.
36030 Sarcedo (VI) (IT)**

(72) Inventor: **BONORA, Stefano
35127 Padova (PD) (IT)**

(74) Representative: **Caldon, Giuliano et al
Gallo & Partners S.r.l.
Via Rezzonico, 6
35131 Padova (IT)**

(54) **METHOD FOR DETECTING OPTICAL ABERRATIONS AND APPARATUS FOR DETECTING OPTICAL ABERRATIONS**

(57)    Method for detecting optical aberrations of an optical lens or of a system of optical lenses, by means of the use of a light projector (1), provided with a light source (2) and with an iris (4) having a pupil (5), with an optical sensor (6) provided with a sensitive surface (7) and with an electronic unit, and with at least one optical lens (100), interposed between the light projector (1) and the optical sensor (6).

The method comprises a projection step, in which the light source (2) emits a first light beam (3), and a scanning step, in which the iris (4) at least partly screens the first light beam (3) and allows the passage, by means of the pupil (5), of a second light beam (8) which hits the optical lens (100), and in which the pupil (5) is translated in order to project corresponding second light beams (8)

on corresponding incidence areas (103) of the optical lens (100), which, when hit by each of the second light beams (8), projects a corresponding third light beam (9) on the sensitive surface (7) of the optical sensor (6).

The method also comprises an acquisition step, in which the optical sensor (6) acquires, for each projected third light beam (9), a measurement image (10) adapted to define the position of the third light beam (9) on the sensitive surface (7), and a step of calculating optical aberrations, in which the electronic unit calculates, as a function of the position of the third light beam (9) with respect to a reference position (11), a corresponding aberration angle ($\alpha$) indicative of optical aberrations associated with the corresponding incidence area (103) of the optical lens (100).

Fig. 2

EP 4 075 115 A1

**Description**

Field of application

The present finding regards a method for detecting optical aberrations and an apparatus for detecting optical aberrations, according to the preamble of the respective independent claims. The method and the present apparatus have particular application in the field of devices provided with an optics defined by at least one lens (such as cameras, video cameras, microscopes, ophthalmic instrumentation, telescopes, etc.) and are advantageously used for characterizing the optics of the device in relation to the aberration that such optics produce when it is traversed by light beams.

More in detail, the aforesaid method and apparatus are used for knowing the characteristics of optical aberration produced by the optics of the device, i.e. the characteristics associated with defects in focusing a light beam and/or in the formation of the images by the same, for many different purposes, so as to be able to duly account for such characteristic during the use of the device as a function of the particular application of the latter.

State of the art

Image acquisition devices (such as cameras, video cameras, telescopes, microscopes, etc.) are generally provided with an optics which comprises at least one lens (usually a system of lenses in cascade) which for example constitutes the objective of a camera and is adapted to focus a light beam coming from the environment to be filmed on the sensitive surface of the device.

For example, the objective of a camera or of a video camera comprises a system of multiple optical lenses, which can be maintained in fixed position or movable with respect to each other in order to modify the characteristics of focus, zoom and focusing of the light beam on the sensitive surface, for example constituted by an optical sensor provided with a matrix of optical transducers.

During use, the refraction of the light beams that traverse the dioptric systems, i.e. the surfaces of the lens or lenses that constitute the objective, can differ from the refraction of the light in an ideal environment. Any optical system can have imperfections due to compromise selections made during design phase or due to the tolerances present in the components and in the assembly phase or due to use. Such refraction of the light beams in non-ideal context and such deviations of the form of the dioptric systems from the design specifications can locally modify, and in a known or not known manner, the characteristics of focus, zoom and focusing of the objective, with consequent production of optical aberrations and decrease of the resolution of an image acquired by means of the same objective.

Due to the aforesaid optical aberrations, several of the light beams corresponding to the image of one point do not perfectly converge in the image in one point, with consequence that such light beam part is not projected on the optical sensor as a point in a specific position but as a light stain with blurred edges that covers multiple pixels and which, when overlapped with other light stains generated by the same optical aberrations, reduces the resolution of the image, rendering it out of focus. In addition, the optical aberrations can also determine a deformation of the image, termed distortion.

Particularly felt in the reference field is the need to estimate the aberration generated by the optics of the device or of an instrument, so as to be able to account for such aberration in the applications in which the device or the instrument are employed.

In addition, so as to improve the resolution of images acquired by means of the objectives subjected to optical aberrations, methods are known, in particular in the microscope field, which provided for generating, from a first acquired image, a second image with increased resolution by executing a deconvolution between the point spread function and the same first acquired image. The point spread function depends on the optical aberrations.

Nevertheless, in many cases the optical aberrations are not known and therefore it is not possible to obtain the point spread function therefrom. In this case, the deconvolution is concluded with "blind methods", that estimate such point spread function to be applied in the deconvolution. The aforesaid iterative methods are complex, difficult in terms of computational calculation and not very precise, since during the iterations they could erroneously recognize optical aberrations that are not actually present on the objective and hence introduce, once the deconvolution of the estimated point spread function and of the acquired image has been executed, artifacts in the image with increased resolution that are not present in reality.

Presentation of the invention

In this situation, the problem underlying the present invention is therefore that of eliminating the problems of the abovementioned prior art, by providing a method for detecting optical aberrations and an apparatus for detecting optical aberrations, which allow detecting in a precise and reliable manner the characteristics of optical aberration generated by the lenses of a device or an optical instrument.

A further object of the present invention is to provide a method and an apparatus for detecting optical aberrations, which allow knowing the characteristics of optical aberration of an optical lens along the entire field of view of the same.

A further object of the present invention is to provide a method and an apparatus for detecting optical aberrations, which allow knowing the characteristics of optical aberration of an optical lens for different wavelengths of the electromagnetic spectrum.

A further object of the present invention is to provide a method and an apparatus for detecting optical aberrations, which allow knowing the characteristics of optical aberration of an optical lens for image filming distances that are different from each other.

A further object of the present invention is to provide a method and an apparatus for detecting optical aberrations, which allow knowing the characteristics of optical aberration of an optical lens in a simple and quick manner.

Brief description of the drawings

The technical characteristics of the invention, according to the aforesaid objects, are clearly seen in the contents of the below-reported claims and the advantages thereof will be more evident in the following detailed description, made with reference to the enclosed drawings, which represent a merely exemplifying and non-limiting embodiment of the invention, in which:

- figure 1 shows a side schematic view of an apparatus for detecting optical aberrations according to the present invention, during a calibration step of the method for detecting optical aberrations, also object of the invention;
- figure 2 shows a side schematic view of the apparatus of figure 1, during a scanning step of the method, object of the present invention;
- figure 3 shows a side schematic view of the apparatus of figure 1, during the scanning step and with a pupil of an iris placed in a different measurement position from that of figure 2;
- figure 4 shows a side schematic view of the apparatus of figure 1, in which a first optical axis of a light projector and a second optical axis of an optical lens are placed tilted with respect to each other by a specific positioning angle;
- figure 5 shows a side schematic view of the apparatus of figure 1, in which the first optical axis and the second optical axis together form a positioning angle having width different from that of figure 4;
- figures 6 and 7 show a side schematic view of the apparatus of figure 1, in which the light projector emits a first light beam with two different wavefront forms;
- figure 8 shows a light projector of the apparatus of figure 1, in which a light source of the light projector is placed at the focal point of a collimation lens in order to project a first light beam having linear wavefront;
- figure 9 shows the light projector of figure 8, in which the light source is placed between the collimation lens and the focal point of the collimation lens in order to project a first light beam having spherical wavefront;
- figure 10 shows an iris of the light projector of the apparatus of figure 1, in accordance with a first embodiment;
- figure 11 shows an iris of the light projector of the apparatus of figure 1, in accordance with a second embodiment.

Detailed description of a preferred embodiment

The method for detecting optical aberrations, object of the present invention, will be described hereinbelow with reference to an apparatus for detecting optical aberrations, also object of the present invention.

The present method and apparatus are advantageously intended to be employed for knowing the characteristics of optical aberration generated by one or more lenses which define the optics of a device or of an instrument, such as a video camera, a camera, a telescope, a microscope and the like.

The method, object of the present invention, provides for the use of a light projector 1 comprising at least one light source 2, which is arranged for emitting a first light beam 3 along an optical path Z, and an iris 4, which is provided with a pupil 5 movable on a lying plane V transverse to the optical path Z.

With the expression "iris", it must be intended hereinbelow at least one opaque separator or body capable of at least partly screening the first light beam 3 and with the expression "pupil" it must be intended hereinbelow an opening made on the opaque separator in order to selectively allow at least part of the first light beam 3 to selectively pass through by means thereof.

Advantageously, the optical path Z can indiscriminately have rectilinear extension, or piecewise linear extension in the event in which for example one or more mirrors are placed to intercept the same optical path Z in order to deviate it along directions that incident with respect to each other.

Preferably, the lying plane V of the iris 4 is substantially orthogonal to the optical path Z.

In addition, the present method provides for the use of an optical sensor 6, placed to intercept the optical path Z and provided with a sensitive surface 7 susceptible of being hit by light beams and with at least one electronic unit configured for processing images of the light beams.

In an entirely conventional manner, the sensitive surface 7 of the optical sensor 6 can comprise a matrix of optical transducers, each corresponding to a pixel, for the acquisition of images in gray scale, or to a chromatic channel of a pixel, for the acquisition of color images, and are arranged for transducing the electromagnetic radiations of the light beams incident thereon into electrical signals, intended to be processed by the electronic unit in order to obtain a corresponding image.

The present method also provides for the use of at least one optical lens 100, which is interposed between the light projector 1 and the optical sensor 6 to intercept the optical path Z.

Advantageously, a single optical lens 100, or a system of multiple optical lenses 100 can be placed to intercept the optical path Z, in particular having a series of lenses, optically coupled together and placed in succession one after the other along the optical axis Z, in a manner such that each lens projects a light beam incident thereon towards the successive lens (e.g. the lenses of an objective that can be maintained in fixed position with respect to each other or be movable with respect to each other in order to modify the characteristics of focusing, focus and zoom of the same objective).

Suitably, in the case of only one optical lens 100, the method (and the apparatus) is arranged for detecting the aberration of the single optical lens 100, while in the case of a system of multiple optical lenses 100 the method (and the apparatus) is arranged for detecting the overall aberration generated by the optical lenses 100 of the system.

In particular, hereinbelow, the characteristics referred to the optical lens 100 (e.g. the focus, the optical axis, the field of view, the aberration) will be intended, in the case of application to a system of multiple lenses, as referred to the corresponding overall characteristics of the system.

In particular, each optical lens 100 is provided with a first dioptric system 101, intended to be hit by a light beam coming from the light projector 1, and with an opposite second dioptric system 102.

In particular, in the event in which a single optical lens 100 is arranged, the first dioptric system 101 of such optical lens 100 is directed towards the light projector 1 and is intended to be hit by the first light beam 3 or by at least part thereof.

In the event in which a system of multiple optical lenses 100 is arranged, the first dioptric system 101 of at least one first optical lens 100 of such system is directed towards the light projector 1 and is intended to be hit by the first light beam 3 or by at least part thereof, and the first dioptric system 101 of each optical lens 100 following the first is directed towards the second dioptric system 102 of the preceding optical lens 100 such that it can be hit by a light beam exiting from the same preceding optical lens 100.

The method also provides for a projection step, in which the light source 2 of the light projector 1 is actuated to emit the first light beam 3 along the optical path Z, and a scanning step, in particular following the aforesaid projection step.

In the scanning step, the iris 4 of the light projector 1 is placed to intercept the optical path Z in order to at least partly screen the first light beam 2 and allow, by means of the pupil 5, a second light beam 8 to pass through which hits the optical lens 100. In addition, the pupil 5 of the iris 4 is at least translated into different measurement positions on the lying plane V in order to project, in particular in succession one after the other, corresponding second light beams 8 on corresponding incidence areas 103 of the optical lens 100.

In particular, the second light beams 8 are projected on corresponding incidence areas 103 which are extended on the first dioptric system 101 of the optical lens 100, whether this is placed separately to intercept the optical path Z or this constitutes part of a system of multiple optical lenses 100.

Advantageously, so as to vary the level of precision with which the optical lens 100 is scanned, in addition to being translated into the different measurement positions, in the aforesaid scanning step the pupil 5 is also size-modified on the lying plane V in order to project corresponding second light beams 8 on corresponding incidence areas 103 of the optical lens 100 having different dimensions from each other.

Still in scanning step, the optical lens 100, when it is hit by each of the second light beams 8, projects a corresponding third light beam 9 on the sensitive surface 7 of the optical sensor 6. Also provided for is an acquisition step, in which the optical sensor 6 acquires, for each third light beam 9 projected on its sensitive surface 7, a measurement image 10 adapted to define the position of the third light beam 9 on the sensitive surface 7.

More in detail, the scanning step and the acquisition step are simultaneous with each other, since the optical sensor 6 acquires a measurement image 10 each time the pupil 5 of the iris 4 is translated, and possibly also size-modified, with the light source 2 actuated to emit the first light beam 3.

Preferably, so as to reduce the time necessary for executing the scanning step, the iris 4 comprises multiple pupils 5, in a manner such that in the aforesaid scanning step, the pupils 5 are translated together into different measurement positions and simultaneously project multiple corresponding second light beams 8 on the incidence areas 103. In this manner, the optical lens 100, when simultaneously hit by the second light beams 8, projects corresponding third light beams 9 at the same time on the sensitive surface 7 of the optical sensor 6.

In this case, in addition, in the acquisition step, the optical sensor 6 preferably acquires, for each group of third light beams 9 projected simultaneously, an overall measurement image bearing the aforesaid third light beams 9 represented.

Such overall measurement image is advantageously processed by the electronic unit of the same optical sensor 6 in order to obtain multiple measurement images 10 therefrom, each of which adapted to define the position of a corresponding third light beam 9 on the sensitive surface 7 separately with respect to the other third light beams 9 of the same group.

The present method also comprises a step of calculating optical aberrations, in which the electronic unit calculates, as a function of the position of the third light beam 9 with respect to a reference position 11 (in particular a centroid), a corresponding aberration angle $\alpha$ indicative of optical aberrations associated with the corresponding incidence area 103 of the optical lens 100.

More in detail, the aberration angle $\alpha$ is defined as the angle formed between the direction along which a light beam incident on a corresponding incidence area 103 of the optical lens 100 is effectively projected and the direction along which the same light beam incident on the same incidence area 103 will be projected in case of refraction of the light in an ideal environment and/or in case of absence of deviations of the form of the dioptric systems 101, 102 of the optical lens 100 from the design specifications.

Preferably, following the calculation of the aberration angles $\alpha$ for each incidence area 103, the calculation step provides for obtaining, from the aforesaid aberration angles $\alpha$, a function representative of the form of the wavefront of a light beam exiting from the optical lens 100 when its first dioptric system 101 is completely illuminated by a light beam.

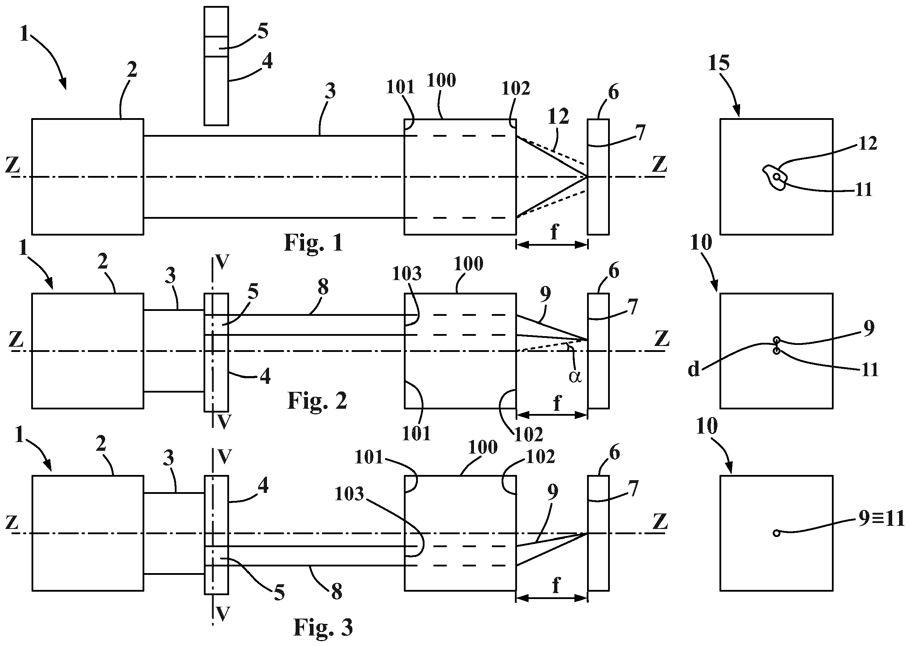

In order to obtain the aforesaid reference position 11, the method preferably comprises a calibration step, preceding at least the calculation step (and advantageously preceding the scanning step), in which the iris 4 is placed in a non-interference position, in which it does not intercept the optical path Z, and the light source 2 of the light projector 1 is actuated to emit the first light beam 3, as illustrated for example in figure 1.

More in detail, in the non-interference position, the iris 4 can completely free the optical path Z in order to ensure that the first light beam 3 completely illuminates the first dioptric system 101 of the optical lens 100 (as in the example of figure 1), or it can at least partly free the optical path Z, i.e. with the expression "at least partly free the optical path Z" it is intended that the iris 4 partially screens the first light beam 3 and allows a part thereof to pass through which illuminates a zone of the first dioptric system 101 having greater extension than the incidence areas 103 identified in the scanning step and such to allow the calculation of the reference position 11.

In the calibration step, the optical lens 100, when hit by the first light beam 3, projects preferably a corresponding fourth light beam 12 on the sensitive surface 7 of the optical sensor 6, which acquires, for the fourth light beam 12, a calibration image 15 adapted to define the position of the fourth light beam 12 on the sensitive surface 7, and the electronic unit establishes, on the sensitive surface 7, the reference position 11 as a function at least of the position of the fourth light beam 12 on the sensitive surface 7.

More in detail, the reference position 11 can be obtained as a mean of the position on the sensitive surface 7 of each pixel of the calibration image 15 illuminated by the fourth light beam 12, and such mean is weighted with reference to the luminance values of each pixel. In this manner, the position of the reference position 11 especially depends on the position of the pixels most illuminated by the fourth light beam 12, i.e. depends more on the position of those pixels at which the fourth light beam 12 was more concentrated.

In accordance with a preferred embodiment, the calibration step is advantageously executed between the projection step and the scanning step.

In accordance with a different embodiment, the calibration step is executed between the acquisition step and the step of calculating the optical aberrations. In the latter case, the optical sensor 6 acquires, for each third light beam 9 projected on the sensitive surface 7, an image 10, and it maintains saved in the memory each of the aforesaid images 10 and, subsequently, the following are executed: calibration step (in which the reference position 11 is established as described above) and the step of calculating the optical aberrations, in which the electronic unit calculates a corresponding aberration angle $\alpha$ as a function of the position of each third light beam 9, which is represented in the images 10 saved in the memory, with respect to the reference position 11, which is obtained during the calibration step.

In accordance with a further embodiment, the calibration step can precede the projection step. Indeed, the calibration step itself provides that the light source 2 of the light projector 1 be actuated to emit the first light beam 1 and, therefore, such calibration step can be independent with respect to the projection step that precedes the scanning step.

Advantageously, the sensitive surface 7 of the optical sensor 6 is placed at a reference distance f from the optical lens 100, preferably such to optimize the focus. In particular, the aforesaid reference distance f is defined by the distance between the sensitive surface 7 and a main plane of the optical lens 100 (it being intended, in the case of a system of multiple optical lenses, that such main plane is identified by an equivalent main plane of the system of optical lenses). For example, in specific conditions, the aforesaid reference distance f can substantially coincide with the focal distance of the optical lens 100.

In the calculation step, each aberration angle $\alpha$ is obtained as a function of the ratio between a distance d and the aforesaid reference distance f, in which such distance d is that of each third light beam 9 projected on the sensitive surface 7 by the reference position 11.

Therefore, such ratio between the distance d and the reference distance f is in particular obtained as approximation of the tangent of each aberration angle $\alpha$ with the same aberration angle $\alpha$ for expected values of the latter that are particularly small, i.e. equal for example to several thousandth or hundredth of radiant.

In particular, the greater the distance d between third light beam 9 on the sensitive surface 7 and reference position 11, the greater the corresponding aberration angle $\alpha$ and, hence, the more considerable the phenomena of optical aberration associated with the particular incidence area 103.

Instead, in the event in which the third light beam 9 and the reference position 11 coincide on the sensitive surface 7, as illustrated for example in figure 3, the aberration angle $\alpha$ is zero and, therefore, the particular scanned incidence area 103 is to be considered by phenomena of optical aberration.

For example, in the event in which the first light beam 3 can be approximated by a beam generated by a source placed at infinity, the calculation step can be implemented by using, as reference distance f, the focal distance of the optical lens 100.

Advantageously, the light projector 1 emits the first light beam 3 along a first optical axis X and the optical lens 100 projects at least the third light beam 8 along a second optical axis Y, which defines, with the first optical axis X, a positioning angle β greater than or equal to 0°. In particular, the first optical axis X of the light projector 1 and the second optical axis Y of the optical lens 100 together at least partially form the aforesaid optical path Z.

The optical lens 100 is provided with a field of view 28 within which the light projector 1 falls, and in particular the first optical axis X of the latter.

More in detail, the field of view 28 is a solid angle within which the optical lens 100 is capable of collecting, on its first dioptric system 101, a light beam in order to project it along the optical axis Y thereof from the other part of the second dioptric system 102.

In order to maintain the light projector 1 within the field of view 28 of the optical lens 100, the positioning angle β is preferably comprised between -90° and 90° and, still more preferably, between -65° and 65°.

More in detail, the present method is advantageously executed for different values of the positioning angle β, within the field of view 28, in particular so as to detect the optical aberrations for each possible direction from which a light beam comes with respect to the optical lens 100.

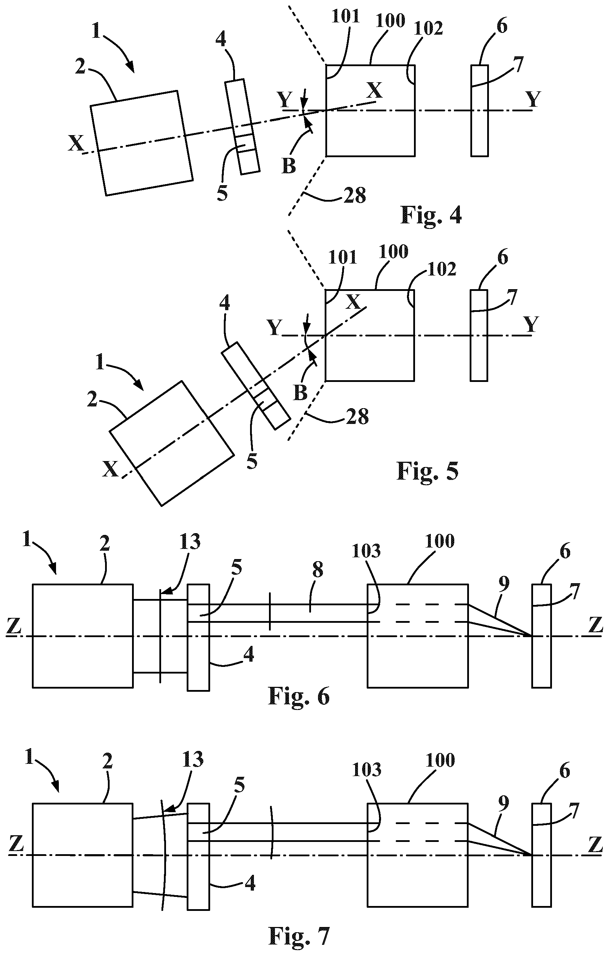

For example, figures 1-3 show relative steps of the method with the positioning angle β equal zero (i.e. with the optical axes X, Y parallel, in particular aligned), while figures 4 and 5 show the scanning step of the method with the positioning angle β non-zero (i.e. with the optical axes X, Y tilted).

Preferably, in order to obtain the different values of the positioning angle β, the light projector 1 is moved along an arc of circumference, in particular having center at the optical lens 100. Advantageously, the optical lens 100 is actuatable to rotate around its second optical axis Y in order to be placed in different angular positions with respect to the latter.

The present method is preferably executed for different angular positions of the optical lens 100, in particular so as to detect the optical aberrations for each possible angular position of the optical lens 100 itself.

Preferably, the light projector 1 is movable in any position (by means of suitable movement and/or guide means) so as to detect the optical aberrations in the entire field of view 28 of the optical lens 100.

Advantageously, the light source 2 of the light projector 1 is arranged for emitting, selectively, first light beams 3 with different wavelengths.

In particular, the present method is advantageously repeated for different wavelengths of the aforesaid first light beams 3.

In this manner, for example, in the event in which the optical lens 100 is intended to be mounted on a camera or a video camera which process the images acquired in a chromatic space RGB, the method can be repeated for each wavelength or wavelength range associated with a corresponding chromatic channel R, G or B of the chromatic space RGB in order to detect, therefore, the optical aberrations of the optical lens 100 at each aforesaid wavelength. In addition, the light projector 1 is advantageously arranged for emitting, selectively, the first light beams 3 with different wavefront forms 13, and the method is repeated for the aforesaid different wavefront forms 13 of the first light beam 3.

In this manner, it is therefore possible to simulate cases in which the first light beam 3, and hence also the second light beam 8, is ideally emitted by a virtual light projector 1' placed at different distances from the optical lens 100. Indeed, as illustrated in figure 6, with a substantially linear wavefront form 13 of the first light beam 3 it is possible to ideally simulate the case in which the first light beam 3 is emitted by a virtual light projector 1' placed at an infinite distance from the optical lens 100.

Otherwise, as illustrated in figure 7, with substantially spherical wavefront form 13 of the light beam 3 it is possible to simulate the case in which the first light beam 3 is emitted by a virtual light projector 1' placed at a distance from the optical lens 100 substantially equal to the radius of the wavefront when the latter has reached the optical lens 100 itself.

Preferably, the present method can be applied in a process for optimizing the resolution of an image.

In particular, the aforesaid process comprises the method for detecting optical aberrations of the type described up to now, by means of which aberration angles α are obtained that are associated with an optical lens 100 or a system of multiple optical lenses 100.

The process advantageously provides for a step of calculating, from the aberration angles α, a wavefront function associated with the optical lens 100, and a step of calculating a point spread function of the optical lens 100, generally known in the technical jargon of the field with the expression "point spread function", by means of Fourier transform of such wavefront function.

More in detail, the wavefront function is a matrix having as elements the aberration angles α associated with the scanned incidence areas 103 or parameters obtained directly starting from the same aberration angles α. In particular, such wavefront function is representative of the wavefront form of a light beam exiting from the optical lens 100 when its first dioptric system 101 is completely illuminated.

Also advantageously provided is the arrangement of an optical filming device comprising at least the optical lens 100 (which defines in particular the objective thereof or part thereof), and a filming step, in which the optical filming device acquires, by means of at least the optical lens 100, a first image.

In addition, the process advantageously comprises a step of correcting the first image, in which a second image is generated with resolution increased by means of deconvolution of the point spread function and of the first image.

More in detail, as is known, theoretically an image acquired by means of an optical filming device is given by the convolution of the scene to be filmed (i.e. that which is framed by the same optical filming device), and of the point spread function (which is representative of the defects in focusing the light beams by the optical lens 100 or system of optical lenses 100 mounted on the optical filming device in order to act as photographic objective), according to the following formula:

$$I = S * PSF,$$

where "I" is the acquired image, "S" is the scene to be filmed, "*" is the convolution operator and "PSF" is the point spread function.

Therefore, since in the present process the first image is acquired (from the sensor) and the point spread function is calculated (as discussed above), the second image with increased resolution (which is associated with the scene to be filmed) is therefore obtained by means of deconvolution of the first image and of the point spread function, according to the following formula:

$$Im2 = deconv\{PSF, Im1\},$$

where "Im2" is the second image with increased resolution, "deconv{ , }" is the deconvolution operator and "Im1" is the first image.

Also forming the object of the present invention is an apparatus for detecting optical aberrations of an optical lens, which is advantageously intended to be employed in the method for detecting optical aberrations of an optical lens described up to now, regarding which the same reference numbers and the same nomenclature will be maintained for the sake of description simplicity.

In the present description, all the structural characteristics described with reference to the steps of the method for detecting optical aberrations of an optical lens must be intended as referable without variations also only to the apparatus, object of the present invention.

The present apparatus comprises a light projector 1, which is provided with at least one light source 2 arranged for emitting a first light beam 3 along an optical path Z, and an optical sensor 6, which is placed to intercept the optical path Z and is provided with a sensitive surface 7 susceptible of being hit by light beams and with at least one electronic unit configured for processing images of the aforesaid light beams.

More in detail, the electronic unit can be directly integrated in the optical sensor 6 or it can be implemented by means of a remote computer in order to execute the processing of the images offline.

Between such light projector 1 and the optical sensor 6, an optical lens 100 is intended to be interposed, to intercept the optical path Z, and still more preferably a system of multiple optical lenses 100 is intended to be interposed, such lenses for example adapted to form an objective.

Preferably, the present apparatus comprises at least one retention element placed to intercept the optical path Z between the light projector 1 and the optical sensor 6 and arranged for receiving and maintaining in position the aforesaid optical lens 100 or the system of multiple optical lenses 100.

According to the idea underlying the present invention, the light projector 1 comprises at least one iris 4, which is provided with a pupil 5 movable on a lying plane V transverse to the optical path Z and is adapted to be placed to intercept the optical path Z in order to at least partly screen the first light beam 2 and allow, by means of the pupil 5, a second light beam 8 to pass through which is adapted to hit the optical lens 100.

In addition, the iris 4 comprises first movement means arranged at least for translating the pupil 2 into different measurement positions along the lying plane V in order to project, in particular in succession one after the other, corresponding second light beams 8 on corresponding incidence areas 103 of the optical lens 100, which, when it is hit by each of the aforesaid second light beams 8, is adapted to project a corresponding third light beam 9 on the sensitive surface 7 of the optical sensor 6.

The optical sensor 6 is also configured for acquiring, for each third light beam 9 projected on the sensitive surface 7, a measurement image 10 indicative of the position of the third light beam 9 on the sensitive surface 7 and the electronic unit is configured for calculating, as a function of the position of the third light beam 9 with respect to a reference position 11, a corresponding aberration angle α indicative of optical aberrations of the corresponding incidence area 103 of the optical lens 100.

Preferably, in order to execute the calibration step in which the position of the reference position 11 is identified, the iris 4 can be actuated between an interference position and the abovementioned non-interference position.

In particular, in the interference position, the iris is placed to intercept the optical path Z in order to screen the first light beam 3 and allow, by means of the pupil 5, the second light beam 8 to pass though, and in the non-interference position, the iris 4 it does not intercept the optical path Z, in a manner such that the entire first light beam 3 or at least most thereof comes to illuminate the optical lens 100, which in turn projects the fourth light beam 12.

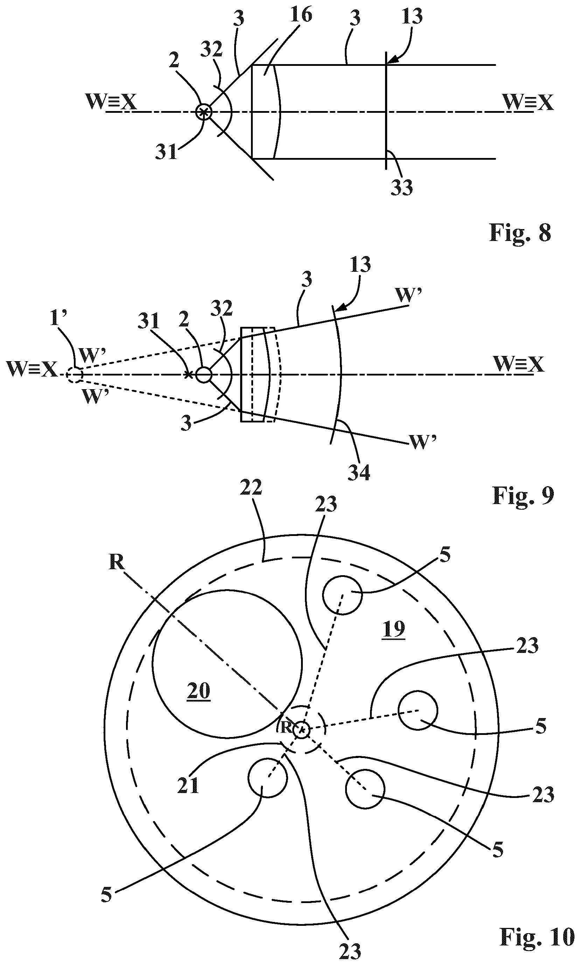

In accordance with a first embodiment of iris 4 illustrated in figure 10, the iris 4 comprises an opaque disc 19 extended on the lying plane V transverse to the optical path Z and actuatable to rotate around a rotation axis S thereof, transverse to the lying plane V, between the non-interference position and at least one interference position.

In addition, the iris 4 advantageously comprises a non-interference opening 20 made on the aforesaid opaque disc 19, extended along a radial direction R at least between a lower threshold circumference 21 and an upper threshold circumference 22 and intended to be placed at the optical path Z in order to allow the passage of the first light beam 3 emitted by the light source 2 towards the optical lens 100 with the opaque disc 19 in non-interference position.

Also advantageously provided for are multiple pupils 5 made on the same opaque disc 19 and each placed at a different radial distance 23 from the rotation axis S, such radial distance 23 comprised between the lower threshold circumference 21 and the upper threshold circumference 22. At least one of the pupils 5 is adapted to project the second light beam 3 on a pre-established incidence area 103 of the optical lens 100 with the opaque disc 19 in interference position.

Preferably, in interference position, multiple pupils 5 are adapted to simultaneously project corresponding light beams 3 on corresponding incidence areas 103.

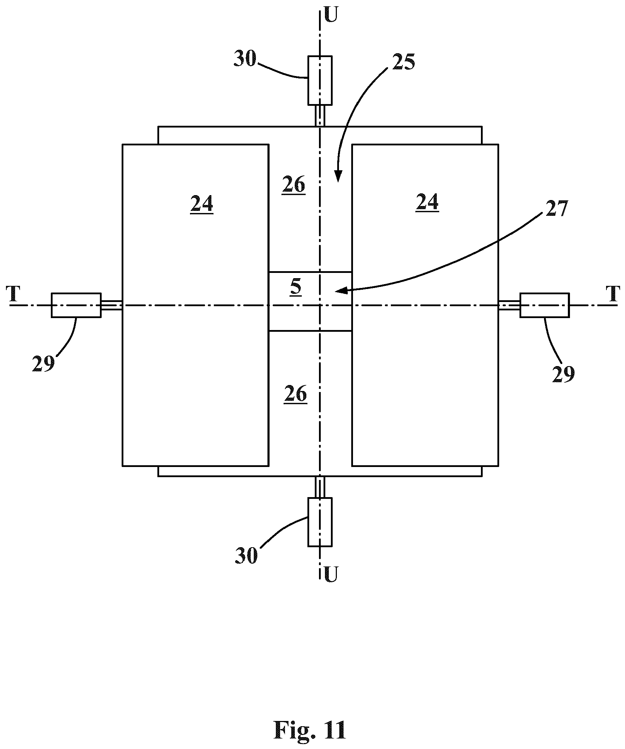

More in detail, in accordance with the aforesaid first embodiment, the first movement means comprise at least one electric motor, which is mechanically connected to the opaque disc 19 and is arranged for rotating it around the rotation axis S, so as to place the same opaque disc 19 in non-interference position, in which the non-interference opening 20 is situated at the optical path Z and allows the first light beam 3 to completely pass through towards the optical lens 100, or in interference position, in which multiple pupils 5 simultaneously project corresponding second light beams 8 on different incidence areas 103 of the optical lens 100. Otherwise, in accordance with a second embodiment of iris 4 illustrated in figure 11, the iris 4 comprises two first separators 24, which together define a first slit 25 and are movable in translation along a first direction T transverse to the first slit 25, and two second separators 26, which together define a second slit 27 transverse to the first slit 25 and are movable along a second direction U transverse to the second slit 27. In particular, the first and second slits 25, 27 delimit the pupil 5 of the iris 4 between them at an intersection thereof.

Preferably, the first direction T is substantially perpendicular to the first slit 25 and the second direction U is substantially perpendicular to the second slit 27.

In addition, the first and second slits 25, 27 are preferably perpendicular to each other and define, at the intersection thereof, a pupil 5 having substantially square or rectangular form.

More in detail, the first movement means can comprise at least one first linear actuator 29, which is mechanically connected to both first separators 24 in order to move them together along the first direction T and consequently also move the first slit 25, and a second linear actuator 30, which is mechanically connected to both second separators 26 in order to move them together along the second direction U and consequently to also move the second slit 27. In this manner, it is thus possible to translate the pupil 5 along both the first direction T and the second direction U in order to project the second light beam 3 on different incidence areas 103 of the optical lens 100.

Otherwise, the first movement means can comprise a first linear actuator 29 mechanically connected to each of the two first separators 24 in order to move them along the first direction T, one independent of the other, and a second linear actuator 30 mechanically connected to each of the second separators 26 in order to move them along the second direction U one independent of the other. In this manner, in addition to moving the first and second slits 25, 26 along the corresponding first and second directions T, U, it is also possible to modify the width of the first and second slits 25, 26 in order to size-modify the pupil 5. In addition, by actuating the first and the second linear actuators 29, 30 to respectively widen the first slit 25 and the second slit 27 with the first separators 24 and the second separators 26 at the maximum possible distance between them, it is possible to bring the iris 4 into non-interference position and allow all or most of the first light beam 3 to pass through. Advantageously, as described above, the light projector 1 is arranged for emitting the first light beam 3 along a first optical axis X and the optical lens is adapted to project at least the third light beam 9 along a second optical axis Y, which defines, with the first optical axis X, a positioning angle $\beta$ greater than or equal to 0°. The optical lens 100 is provided with a field of view 28 within which the light projector 1 falls and in particular the first optical axis X of the latter. In addition, the present apparatus advantageously comprises second movement means mechanically connected at least to the light projector 1 and arranged for moving the light projector 1, modifying the values of the positioning angle $\beta$, within the field of view 28.

In this manner, it is thus possible to repeat the above-described method for detecting optical aberrations of an optical lens for different values of the positioning angle $\beta$, so as to detect the optical aberrations for any possible direction from which the light beams arrive with respect to the same optical lens 100.

For example, the present apparatus comprises at least one guide with arc of circumference extension, with the center of the aforesaid arc of circumference at the optical lens 100. In addition, preferably, the light projector 1 is slidably connected to the aforesaid guide and is actuated to translate therealong by the second movement means, in a manner such that the positioning angle $\beta$ can be modified but the light projector 1 itself is always directed towards the optical lens 100.

In addition, the present apparatus preferably comprises fourth movement means mechanically connected to the retention element of the optical lens 100 and arranged for rotating the same optical lens 100 around the second optical axis Y thereof, in a manner such that the method can be executed for different angular positions of the optical lens 100 around its second optical axis Y.

In particular, by varying the aforesaid positioning angle β and by varying, by rotating, the optical lens 100 around its second rotation axis Y, the present method can be repeated for any possible position of the light projector 1 within the field of view 28.

Suitably, further or different movement means (with respect to those of the examples discussed above) can also be provided, which are arranged in order to place the light projector 1 in any spatial point and with any orientation, so as to execute the present method for any possible position of the light projector 1 within the field of view 28.

In addition, advantageously, the light projector 1 comprises a collimation lens 16, which is interposed between the light source 2 and the iris 4 and is provided with a third optical axis W passing through the light source 2, and third movement means, which are arranged for moving the collimation lens 16 and the light source 2 with respect to each other at least along said third optical axis W.

More in detail, the collimation lens 16 is provided with a focal point 31 placed along the third optical axis W thereof.

Preferably, the light source 2 is arranged for emitting the first light beam 3 with a first spherical wavefront 32.

In this manner, by actuating the third movement means to translate the collimation lens 16 and the light source 2 with respect to each other, it is possible to modify the wavefront form 13 of the first light beam 3, thus it is possible to repeat the method for detecting optical aberrations of an optical lens for different wavefront forms 13 and ideally simulate cases in which the first light beam 3, and hence also the second light beam 8, is emitted by virtual light projectors 1' at different distances from the same optical lens 100.

In particular, by placing, by means of the third movement means, the light source 2 at the focal point 31 of the collimation lens 16, the first light beam 3 is collimated by the collimation lens 16 along directions parallel to the third optical axis W in order to obtain, from the first spherical wavefront 32, a linear wavefront 33, so as to simulate therefore the case of a virtual light projector 1' placed at an infinite distance from the optical lens 100.

In addition, by placing the light source 2 between the collimation lens 16 and its focal point 31 and adjusting the distance between light source 2 and collimation lens 16 by means of the aforesaid third movement means, the first light beam 3 is projected by the collimation lens 16 along directions diverging from the third optical axis W in order to obtain, from the first spherical wavefront 32, a second spherical wavefront 34 with radius that depends on the position of the light source 2 between focal point 31 and collimation lens 16. More in detail, the directions W' diverging from the third optical axis W meet at a point at which a virtual light projector 1' is ideally situated which emits a virtual light beam with wavefront identical to the second spherical wavefront 34 of the first light beam 3 projected by means of the collimation lens 16.

In particular, the third optical axis W of the collimation lens 16 coincides with the first optical axis X of the light projector 1.

Advantageously, as previously described above, the light source 2 of the light projector 1 is arranged for emitting, selectively, first light beams 3 with different wavelengths, so as to be able to repeat the method for selected different wavelengths of the first light beam 3.

More in detail, the light source 2 comprises multiple secondary light sources, for example multiple LED or laser sources, each arranged for emitting, one independent from the other, a corresponding first light beam 3 at a corresponding selected wavelength.

Otherwise, the light source 2 is arranged for emitting the aforesaid first light beam 3 with a wide electromagnetic spectrum of wavelengths and the light projector 1 comprises multiple selector filters, which are each adapted to allow electromagnetic radiations at specific wavelengths to pass through and screen the others, and they are each actuatable between a filtering position, in which it is placed to intercept the optical path Z at least between the light source 2 and the optical lens 100, and a non-filtering position, in which it is placed distal from the optical path Z.

The method and the apparatus for detecting optical aberrations of an optical lens 100 described above therefore attain the pre-established objects.

## Claims

1. Method for detecting optical aberrations, obtained by means of the use of:

    - a light projector (1) comprising:

        - at least one light source (2), which is arranged for emitting a first light beam (3) along an optical path (Z),
        - an iris (4), which is provided with a pupil (5) movable on a lying plane (V) transverse to said optical path (Z);

        - an optical sensor (6), placed to intercept said optical path (Z) and provided with a sensitive surface (7) susceptible of being hit by light beams and with at least one electronic unit configured for processing images of said light beams;
        - at least one optical lens (100), which is interposed between said light projector (1) and said optical sensor (6) to intercept said optical path (Z);

said method being **characterized in that** it comprises:

- a projection step, in which the light source (2) of said light projector (1) is actuated to emit said first light beam (3) along said optical path (Z);
- a scanning step, in which:

- the iris (4) of said light projector (1) is placed to intercept said optical path (Z) in order to at least partly screen said first light beam (2) and allow a second light beam (8) to pass through said pupil (5), said second light beam (8) hitting said optical lens (100),
- the pupil (5) of said iris (4) is at least translated into different measurement positions on said lying plane (V) in order to project corresponding said second light beams (8) on corresponding incidence areas (103) of said optical lens (100);
- said optical lens (100), when it is hit by each of said second light beams (8), projects a corresponding third light beam (9) on the sensitive surface (7) of said optical sensor (6);

- an acquisition step, in which said optical sensor (6) acquires, for each said third light beam (9) projected on said sensitive surface (7), an image (10) adapted to define the position of said third light beam (9) on said sensitive surface (7);
- a step of calculating the optical aberrations, in which said electronic unit calculates, as a function of the position of said third light beam (9) with respect to a reference position (11), a corresponding aberration angle ($\alpha$) indicative of optical aberrations associated with the corresponding said incidence area (103) of said optical lens (100).

2. Method for detecting optical aberrations according to claim 1, **characterized in that** it comprises a calibration step, preceding at least said calculation step, in which:

- said iris (4) is placed in a non-interference position, in which it does not intercept said optical path (Z);
- the light source (2) of said light projector (1) is actuated to emit said first light beam (3);
- said optical lens (100), when it is hit by said first light beam (3), projects a corresponding fourth light beam (12) on the sensitive surface (7) of said optical sensor (6);
- said optical sensor (6) acquires, for said fourth light beam (12), a calibration image (15) adapted to define the position of said fourth light beam (12) on said sensitive surface (7);

- said electronic unit establishes, on said sensitive surface (7), said reference position (11) as a function at least of the position of said fourth light beam (12) on said sensitive surface (7).

3. Method for detecting optical aberrations according to claim 1 or 2, **characterized in that** the sensitive surface (7) of said optical sensor (6) is placed at a reference distance (f) from said optical lens (100); in said calculation step, each said aberration angle ($\alpha$) being obtained as a function of the ratio between:

- a distance (d) of each third light beam (9) projected on said sensitive surface (7) from said reference position (11),
- and said reference distance (f).

4. Method for detecting optical aberrations according to any one of the preceding claims, **characterized in that**, in said scanning step, the pupil (5) of said iris (4) is size-modified on said lying plane (V) in order to project corresponding said second light beams (8) on corresponding incidence areas (103) of said optical lens (100) having different dimensions from each other.

5. Method for detecting optical aberrations according to any one of the preceding claims, **characterized in that** said light projector (1) emits said first light beam (3) along a first optical axis (X) and said optical lens (100) is provided with a field of view (28) and projects at least said third light beam (9) along a second optical axis (Y), which defines, with said first optical axis (X), a positioning angle ($\beta$) greater than or equal to 0°; said method being executed for different values of said positioning angle ($\beta$) within said field of view (28).

6. Method for detecting optical aberrations according to any one of the preceding claims, **characterized in that** the light source (2) of said light projector (1) is arranged for emitting, selectively, first light beams (3) with different wavelengths, and that said method is repeated for different said wavelengths of said first light beams (3).

7. Method for detecting optical aberrations according to any one of the preceding claims, **characterized in that** said light projector (1) is arranged for emitting, selectively, said first light beams (3) with different wavefront forms (13), and said method is repeated for different said wavefront forms (13) of said first light beam (3).

8. Method for detecting optical aberrations according to any one of the preceding claims, **characterized in that** said optical lens (100) is provided with a second optical axis (Y) and is actuatable to rotate around said second optical axis (Y) in order to be placed in different angular positions;

said method being executed for different said angular positions of said optical lens (100).

9. Process for optimizing the resolution of an image; which comprises:

- the method for detecting optical aberrations according to any one of the preceding claims, by means of which said aberration angles ($\alpha$) associated with said optical lens (100) are obtained;
- a step of calculating, from said aberration angles ($\alpha$), a wavefront function associated with said optical lens (100);
- a step of calculating a point spread function of said optical lens (100) from said wavefront function;
- a step of arranging an optical filming device comprising at least said optical lens (100);
- a filming step, in which said optical filming device acquires, through at least said optical lens (100), a first image;
- a step of correcting said first image, in which a second image is generated with resolution increased by means of deconvolution of said point spread function and of said first image.

10. Apparatus for detecting optical aberrations, which comprises:

- a light projector (1) provided with at least one light source (2), which is arranged for emitting a first light beam (3) along an optical path (Z);
- an optical sensor (6), placed to intercept said optical path (Z) and provided with a sensitive surface (7) susceptible of being hit by light beams and with at least one electronic unit configured for processing images of said light beams;

between said light projector (1) and said optical sensor (6), an optical lens (100) being intended to be interposed in order to intercept said optical path (Z); said apparatus being **characterized in that** said light projector (1) comprises at least one iris (4), which is provided with a pupil (5) movable on a lying plane (V) transverse to said optical path (Z) and is adapted to be placed to intercept said optical path (Z) in order to at least partly screen said first light beam (3) and allow a second light beam (8) to pass through said pupil (5), said second light beam (8) adapted to hit said optical lens (100);

said iris (4) comprising first movement means arranged at least for translating said pupil (5) into different measurement positions along said lying plane (V) in order to project corresponding said second light beams (8) on corresponding incidence areas (103) of said optical lens (100), and said optical lens (100), when it is hit by each of said second light beams (8), is adapted to project a corresponding third light beam (9) on the sensitive surface (7) of said optical sensor (6);

said optical sensor (6) being configured for acquiring, for each said third light beam (9) projected on said sensitive surface (7), a measurement image (10) indicative of the position of said third light beam (9) on said sensitive surface (7); and

said electronic unit being configured for calculating, as a function of the position of said third light beam (9) with respect to a reference position (11), a corresponding aberration angle ($\alpha$) indicative of optical aberrations of the corresponding said incidence area (103) of said optical lens (100).

11. Apparatus for detecting optical aberrations according to claim 10, **characterized in that** said light projector (1) is arranged for emitting said first light beam (3) along a first optical axis (X) and that said optical lens (100) is provided with a field of view (28) and is adapted to project at least said third light beam (8) along a second optical axis (Y), which defines, with said first optical axis (X), a positioning angle ($\beta$) greater than or equal to 0°;

said apparatus comprising second movement means mechanically connected at least to said light projector (1) and arranged for moving said light projector (1), modifying the values of said positioning angle ($\beta$) within said field of view (28).

12. Apparatus for detecting optical aberrations according to claim 10 or 11, **characterized in that** said light projector (1) comprises:

- a collimation lens (16), which is interposed between said light source (2) and said iris (4) and is provided with a third optical axis (W) passing through said light source (2);
- third movement means mechanically connected at least to said collimation lens (16) and arranged for moving said collimation lens (16) and said light source (2) with respect to each other at least along said third optical axis (W).

13. Apparatus for detecting optical aberrations according to any one of the claims from 10 to 12, **characterized in that** said iris (4) comprises:

- an opaque disc (19) extended on said lying plane (V) transverse to said optical path (Z) and actuatable to rotate around a rotation axis (S) thereof, transverse to said lying plane (V), between a non-interference position and at least one interference position;

- a non-interference opening (20) made on said opaque disc (19), extended along a radial direction (R) at least between a lower threshold circumference (21) and an upper threshold circumference (22) and intended to be placed at said optical path (Z) in order to allow the passage of said first light beam (3) emitted by said light source (2) towards said optical lens (100) with said opaque disc (17) in non-interference configuration;

- multiple pupils (5) made on said opaque disc (19) and each placed at a different radial distance (23) from the rotation axis (S) comprised between said lower threshold circumference (21) and said upper threshold circumference (22); at least one of said pupils (5) being adapted to project said second light beam (3) on a pre-established incidence area (103) of said optical lens (100) with said opaque disc (19) in interference configuration.

14. Apparatus for detecting optical aberrations according to any one of the claims from 10 to 13, **characterized in that** said iris (4) comprises:

- two first separators (24), which define between them a first slit (25) and are movable in translation along a first direction (T) transverse to said first slit (25);
- two second separators (26), which define between them a second slit (27) transverse to said first slit (25) and are movable along a second direction (U) transverse to said second slit (27);

said first and second slits (25, 27) delimiting between them the pupil (5) of said iris (4) at an intersection thereof.

Fig. 1

Fig. 2

Fig. 3

EP 4 075 115 A1

Fig. 4

Fig. 5

Fig. 6

Fig. 7

Fig. 8

Fig. 9

Fig. 10

Fig. 11

Europäisches
Patentamt

European
Patent Office

Office européen
des brevets

## EUROPEAN SEARCH REPORT

**Application Number**

EP 22 16 8667

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2006/250607 A1 (TAKAHASHI AKIRA [JP]) 9 November 2006 (2006-11-09) <br> * paragraph [0007] * <br> * paragraph [0019] * <br> * paragraph [0027] * <br> * paragraph [0042] * <br> * paragraph [0058] * <br> * paragraph [0070] * <br> * paragraph [0094] * <br> * paragraph [0133] * <br> * paragraph [0151] * <br> * paragraph [0154] * <br> * figures 1-3, 5-7 * <br> ----- | 1-14 | INV. <br> G01M11/02 <br> G02B27/00 <br><br> ADD. <br> G03F7/20 |
| Y | US 2018/172962 A1 (COUMERT BRUNO [FR] ET AL) 21 June 2018 (2018-06-21) <br> * paragraph [0053] - paragraph [0067] * <br> * figure 8 * <br> ----- | 1-14 | |
| Y | US 2016/225580 A1 (KOHNO YUJI [JP]) 4 August 2016 (2016-08-04) <br> * paragraph [0005] * <br> * paragraph [0009] * <br> * paragraph [0042] - paragraph [0043] * <br> * paragraph [0048] * <br> * paragraph [0063] * <br> * paragraph [0066] * <br> * paragraph [0069] * <br> * paragraph [0078] - paragraph [0079] * <br> * paragraph [0084] * <br> * figure 9A * <br> ----- | 3 | TECHNICAL FIELDS SEARCHED (IPC) <br><br> G01M <br> G03F <br> G02B |
| Y | US 2004/214095 A1 (NAKAO SHUJI [JP]) 28 October 2004 (2004-10-28) <br> * paragraph [0002] * <br> * paragraph [0026] - paragraph [0027] * <br> * paragraph [0123] - paragraph [0124] * <br> ----- <br> -/-- | 4 | |

The present search report has been drawn up for all claims

| Place of search | Date of completion of the search | Examiner |
|---|---|---|
| The Hague | 2 September 2022 | Votini, Stefano |

EPO FORM 1503 03.82 (P04C01)

page 1 of 3

## EUROPEAN SEARCH REPORT

Europäisches
Patentamt
European
Patent Office
Office européen
des brevets

| Application Number |
| --- |
| EP 22 16 8667 |

### DOCUMENTS CONSIDERED TO BE RELEVANT

| Category | Citation of document with indication, where appropriate, of relevant passages | Relevant to claim | CLASSIFICATION OF THE APPLICATION (IPC) |
| --- | --- | --- | --- |
| Y | US 2006/146285 A1 (HIROHARA YOKO [JP] ET AL) 6 July 2006 (2006-07-06)<br>* paragraph [0045] *<br>* paragraph [0125] *<br>* paragraph [0160] *<br>* figures 6, 7 * | 6,7 | |
| A | JP 2006 179904 A (SAMSUNG ELECTRONICS CO LTD) 6 July 2006 (2006-07-06)<br>* paragraphs [0011], [0024], [0029], [0039] – [0050] *<br>* figures 4, 14 * | 1,10 | |
| A | JP 2002 372406 A (NIKON CORP) 26 December 2002 (2002-12-26)<br>* paragraph [0008] *<br>* paragraph [0010] *<br>* paragraph [0014] *<br>* paragraph [0020] *<br>* figures 1, 3 * | 1-14 | |
| A | JP 2004 172316 A (NIKON CORP) 17 June 2004 (2004-06-17)<br>* paragraph [0001] *<br>* figures 2, 7 * | 1-14 | TECHNICAL FIELDS SEARCHED (IPC) |
| A | JP 2012 022971 A (UNIV TOKYO; JEOL LTD) 2 February 2012 (2012-02-02)<br>* paragraph [0068] * | 1 | |
| A | US 6 833 906 B1 (OHSAKI YOSHINORI [JP]) 21 December 2004 (2004-12-21)<br>* column 2, line 40 – line 53 * | 1 | |
| A | JP 2002 195913 A (NIKON CORP) 10 July 2002 (2002-07-10)<br>* figures 1-4 * | 1 | |

-/--

The present search report has been drawn up for all claims

| Place of search | Date of completion of the search | Examiner |
| --- | --- | --- |
| The Hague | 2 September 2022 | Votini, Stefano |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 22 16 8667

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JP 4 590181 B2 (CANON KK) 1 December 2010 (2010-12-01) * paragraph [0001] * * paragraph [0003] * * paragraph [0018] * * paragraph [0028] * * paragraph [0040] * ----- | 1-14 | |
| A | JP 2005 158829 A (NIKON CORP) 16 June 2005 (2005-06-16) * paragraph [0002] * * paragraph [0023] * * paragraph [0025] * * paragraph [0030] * * paragraph [0052] * ----- | 1 | |
| A | WO 2004/059710 A1 (NIKON CORP [JP]; HAGIWARA TSUNEYUKI [JP]) 15 July 2004 (2004-07-15) * figure 1 * ----- | 1-14 | |
| A | US 6 819 414 B1 (TAKEUCHI HITOSHI [JP]) 16 November 2004 (2004-11-16) * column 1, line 15 - line 29 * ----- | 1-14 | TECHNICAL FIELDS SEARCHED (IPC) |
| A | US 2012/206701 A1 (MAEDA HIRONORI [JP]) 16 August 2012 (2012-08-16) * figures 1-4 * ----- | 1 | |

The present search report has been drawn up for all claims

| Place of search | Date of completion of the search | Examiner |
|---|---|---|
| The Hague | 2 September 2022 | Votini, Stefano |

EPO FORM 1503 03.82 (P04C01)

page 3 of 3

## ANNEX TO THE EUROPEAN SEARCH REPORT
## ON EUROPEAN PATENT APPLICATION NO.

EP 22 16 8667

This annex lists the patent family members relating to the patent documents cited in the above-mentioned European search report.
The members are as contained in the European Patent Office EDP file on
The European Patent Office is in no way liable for these particulars which are merely given for the purpose of information.

02-09-2022

| Patent document cited in search report | | Publication date | Patent family member(s) | | Publication date |
|---|---|---|---|---|---|
| US 2006250607 | A1 | 09-11-2006 | EP | 1681709 A1 | 19-07-2006 |
| | | | JP WO2005038885 A1 | | 01-02-2007 |
| | | | US | 2006250607 A1 | 09-11-2006 |
| | | | WO | 2005038885 A1 | 28-04-2005 |
| US 2018172962 | A1 | 21-06-2018 | EP | 3339932 A1 | 27-06-2018 |
| | | | FR | 3060773 A1 | 22-06-2018 |
| | | | PT | 3339932 T | 05-11-2019 |
| | | | US | 2018172962 A1 | 21-06-2018 |
| US 2016225580 | A1 | 04-08-2016 | JP | 6533665 B2 | 19-06-2019 |
| | | | JP | 2016143581 A | 08-08-2016 |
| | | | US | 2016225580 A1 | 04-08-2016 |
| US 2004214095 | A1 | 28-10-2004 | DE | 10223761 A1 | 26-06-2003 |
| | | | JP | 2003156832 A | 30-05-2003 |
| | | | KR | 20030043587 A | 02-06-2003 |
| | | | US | 2003095247 A1 | 22-05-2003 |
| | | | US | 2004214095 A1 | 28-10-2004 |
| US 2006146285 | A1 | 06-07-2006 | AU | 2003266599 A1 | 19-04-2004 |
| | | | EP | 1543767 A1 | 22-06-2005 |
| | | | US | 2006146285 A1 | 06-07-2006 |
| | | | WO | 2004028355 A1 | 08-04-2004 |
| JP 2006179904 | A | 06-07-2006 | JP | 2006179904 A | 06-07-2006 |
| | | | KR | 20060070950 A | 26-06-2006 |
| | | | US | 2006154155 A1 | 13-07-2006 |
| | | | US | 2010112466 A1 | 06-05-2010 |
| JP 2002372406 | A | 26-12-2002 | NONE | | |
| JP 2004172316 | A | 17-06-2004 | NONE | | |
| JP 2012022971 | A | 02-02-2012 | JP | 5499282 B2 | 21-05-2014 |
| | | | JP | 2012022971 A | 02-02-2012 |
| US 6833906 | B1 | 21-12-2004 | JP | 3774590 B2 | 17-05-2006 |
| | | | JP | 2000340488 A | 08-12-2000 |
| | | | US | 6833906 B1 | 21-12-2004 |
| JP 2002195913 | A | 10-07-2002 | NONE | | |
| JP 4590181 | B2 | 01-12-2010 | JP | 4590181 B2 | 01-12-2010 |
| | | | JP | 2005156511 A | 16-06-2005 |

EPO FORM P0459

For more details about this annex : see Official Journal of the European Patent Office, No. 12/82

page 1 of 2

## ANNEX TO THE EUROPEAN SEARCH REPORT
## ON EUROPEAN PATENT APPLICATION NO.

EP 22 16 8667

This annex lists the patent family members relating to the patent documents cited in the above-mentioned European search report.
The members are as contained in the European Patent Office EDP file on
The European Patent Office is in no way liable for these particulars which are merely given for the purpose of information.

02-09-2022

| Patent document cited in search report | | | Publication date | Patent family member(s) | | | Publication date |
|---|---|---|---|---|---|---|---|
| JP 2005158829 | A | | 16-06-2005 | NONE | | | |
| WO 2004059710 | A1 | | 15-07-2004 | AU | 2003289427 | A1 | 22-07-2004 |
| | | | | JP | WO2004059710 | A1 | 11-05-2006 |
| | | | | WO | 2004059710 | A1 | 15-07-2004 |
| US 6819414 | B1 | | 16-11-2004 | NONE | | | |
| US 2012206701 | A1 | | 16-08-2012 | JP | 5013921 | B2 | 29-08-2012 |
| | | | | JP | 2008244386 | A | 09-10-2008 |
| | | | | KR | 20080088480 | A | 02-10-2008 |
| | | | | TW | 200903182 | A | 16-01-2009 |
| | | | | US | 2008239271 | A1 | 02-10-2008 |
| | | | | US | 2012206701 | A1 | 16-08-2012 |

EPO FORM P0459

For more details about this annex : see Official Journal of the European Patent Office, No. 12/82

page 2 of 2